Europäisches Patentamt

European Patent Office

Office européen des brevets

(19)

(11) Numéro de publication: **0 147 328 B1**

(12) **FASCICULE DE BREVET EUROPEEN**

(45) Date de publication de fascicule du brevet:
28.08.91

(51) Int. Cl.⁵: **G09F 3/03**

(21) Numéro de dépôt: 84402709.4

(22) Date de dépôt: **21.12.84**

Demande divisionnaire 89200879.8 déposée le 21/12/84.

(54) **Dispositif optique de scellement d'un conteneur et procede de detection d'une tentative d'effraction a l'aide de ce dispositif.**

(30) Priorité: **29.12.83 FR 8321021**

(43) Date de publication de la demande:
**03.07.85 Bulletin 85/27**

(45) Mention de la délivrance du brevet:
**28.08.91 Bulletin 91/35**

(84) Etats contractants désignés:
**BE CH DE FR GB IT LI NL SE**

(56) Documents cités:
FR-A- 2 557 543        US-A- 3 854 792
US-A- 4 074 415        US-A- 4 095 872
US-A- 4 106 849        US-A- 4 467 172

NAVY TECHNICAL DISCLOSURE BULLETIN;
vol. 7, no. 2, décembre 1981, pages 53-55;
Washington, US - A. LOHANICK: "A camera
external data block."

MANUFACTURING TECHNOLOGY NOTE, HDL-
TR-1729, October 1980; Alexandria, US - R.
ULRICH: "Tamper-resistant security system."

(73) Titulaire: **COMMISSARIAT A L'ENERGIE ATO-
MIQUE Etablissement de Caractère Scientifique Technique et Industriel
31/33, rue de la Fédération
F-75015 Paris(FR)**

(72) Inventeur: **Carratt, Michel
13, rue Camille Pelletan
F-78800 Houilles(FR)**
Inventeur: **Hakoun, Roland
4, Place Raspail
F-95330 Domont(FR)**
Inventeur: **Maurel, Jean-Joseph
15, rue Victor Clément
F-92160 Antony(FR)**
Inventeur: **Pecastaings, Serge
3Bis Place de la Gare de Lozere
F-91120 Palaiseau(FR)**
Inventeur: **Repain, Pascal
97, route de Carrières
F-78400 Chatou(FR)**

(74) Mandataire: **Mongrédien, André et al
c/o BREVATOME 25, rue de Ponthieu
F-75008 Paris(FR)**

## Description

La présente invention a pour objet un dispositif de scellement ou de fermeture d'un conteneur permettant de déceler une tentative d'effraction ou un vol même si le voleur réussit à remettre en place le dispositif de fermeture.

Dans la suite du présent texte, on utilisera le mot "conteneur" pour désigner non seulement un récipient pouvant contenir par exemple des déchets radioactifs, mais n'importe quel objet fermé destiné à contenir des produits, objets ou documents qui risquent de faire l'objet d'une tentative de vol ou d'ouverture. Le mot "conteneur" peut donc désigner aussi bien un récipient qu'un coffre, un meuble, une armoire ou un objet transportable comme une mallette ou une valise.

Il existe à l'heure actuelle un certain nombre de dispositifs de scellement permettant de détecter une tentative d'ouverture d'un conteneur. La plupart consiste en un câble qui passe à travers la genouillère ou les ouïes de fermeture du conteneur et dont les extrémités sont reliées à un boîtier dans lequel on a coulé une masse de résine qui s'est fissurée au refroidissement. Ces fissures forment un dessin bien déterminé que l'on photographie au départ : si quelqu'un réussit à ouvrir et refermer le boîtier, il risque de déplacer la masse de résine ou de créer de nouvelles fissures et l'on peut observer ce changement grâce à une nouvelle photographie. Cependant, on ne détectera rien si le voleur ne touche pas au boîtier et se contente de couper le câble puis de le reconstituer par épissurage.

Le brevet américain 4 106 849 décrit un dispositif de scellement à fibres optiques qui comporte un câble à fibres optiques dont les deux extrémités se trouvent à l'intérieur d'un corps de scellé dans lequel les extrémités de fibres s'entrecroisent. On obtient ainsi une figure unique lorsqu'on observe l'une des extrémités du câble avec un microscope. Dans le procédé d'observation et de contrôle, on illumine l'une des extrémités du câble à l'aide d'un projecteur et l'on observe l'autre extrémité à l'aide d'un microscope. Un réticule mobile en rotation et portant une ligne ou une marque opaque permet de masquer un certain nombre de fibres dont les coordonnées sont repérées grâce à un autre réticule monté près de l'oculaire. Si quelqu'un manipule le dispositif de scellement, la disposition relative des fibres change et les coordonnées des fibres masquées par la ligne changent également, ce qui permet de détecter une tentative d'effraction.

Dans ce dispositif, le réticule fait partie d'un appareil externe et peut être mobile en rotation, les coordonnées pouvant être changées. De plus, ce dispositif ne peut pas se distinguer d'autres dispositifs du même type appliqués à des conteneurs entreposés de façon contiguë.

La présente invention a justement pour objet de remédier à cet inconvénient grâce à un dispositif de scellement qui permet de détecter n'importe quelle tentative d'effraction sur un conteneur déterminé, quel que soit l'endroit où la manipulation a été faite.

Le dispositif objet de l'invention comporte, de manière connue, un câble à fibres optiques passant dans au moins une pièce en forme d'anneau solidaire du conteneur, ce câble ayant une extrémité d'entrée de la lumière et une extrémité de sortie de la lumière, des moyens pour masquer au moins une partie des fibres à l'extrémité d'entrée du câble, des moyens d'observation de l'extrémité de sortie lorsqu'on éclaire l'extrémité d'entrée, les deux extrémités du câble étant maintenues dans un corps de scellé dont au moins une partie est transparente à la lumière. Selon l'invention les moyens pour masquer au moins une partie des fibres à l'extrémité d'entrée du câble comprennent une pastille de masquage placée devant ladite extrémité d'entrée dans le corps de scellé. Il comporte en outre, à l'intérieur du corps de scellé, un prisme disposé de manière à réfléchir une partie de la lumière se dirigeant vers l'extrémité d'entrée du câble, ce prisme portant des caractères alphanumériques permettant le repérage crypté du dispositif.

Il est avantageux que le corps de scellé comporte deux cavités dans chacune desquelles est logée une extrémité du câble, chaque extrémité du câble étant placée à l'intérieur d'un tube lui-même maintenu dans ladite cavité, ce tube étant serti sur le câble.

L'invention apparaîtra mieux à la lecture de la description qui va suivre, donnée à titre purement illustratif et nullement limitatif, en référence aux dessins annexés, dans lesquels :
- la figure 1 est une vue schématique en perspective du corps de scellé utilisé dans le mode de réalisation du dispositif objet de l'invention ;
- la figure 2 est une vue schématique de l'ensemble du dispositif objet de l'invention dans son mode de réalisation ;
- la figure 3 représente l'effet obtenu lorsqu'on masque une extrémité du câble à fibres optiques à l'aide d'une pastille de masquage ; et
- la figure 4 est une vue schématique en perspective montrant le connecteur qui permet de verrouiller le corps de scellé en position vis-à-vis d'un guide d'onde d'émission et d'un dispositif de lecture.

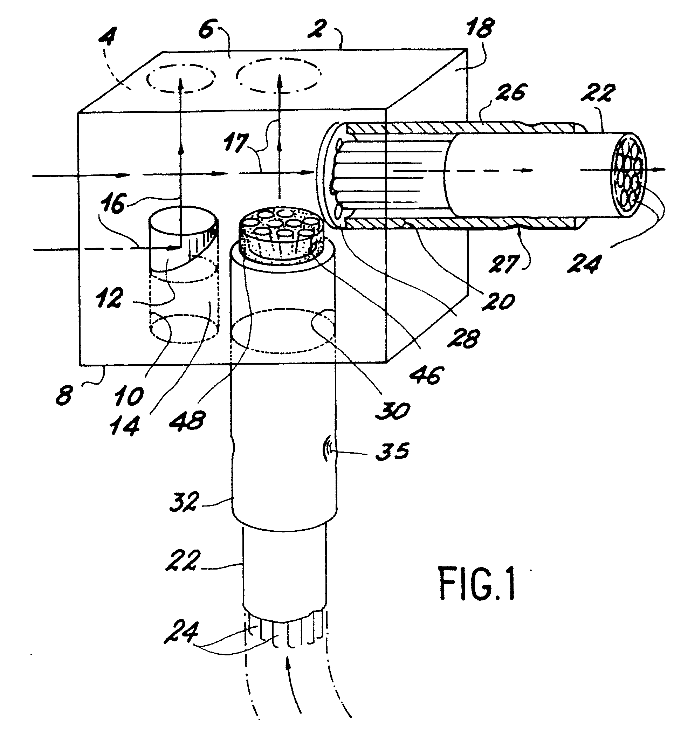

Si l'on se reporte à la figure 1, on voit que le dispositif de l'invention se compose essentiellement d'un corps de scellé 2, réalisé partiellement en un matériau transparent à la lumière, et ayant sensiblement la forme d'un parallélépipède rectangle. Il présente une face d'entrée de la lumière 4 destinée à recevoir la lumière émise par une source, et une face de sortie 6 qui permet à la lumière ayant traversé le dispositif d'être envoyée sur un appareil photographique. La forme parallélépipédique n'est cependant pas obligatoire, l'essentiel étant d,avoir une face d'entrée et une face de sortie qui soient planes et perpendiculaires entre elles, le reste pouvant éventuellement varier pour la commodité d'emploi.

A partir de la face 8 du corps 2, qui est la face opposée à la face de sortie 6, est percée une cavité 10 dans laquelle est introduit un prisme 12 que l'on bloque en position au moyen d'un bouchon 14. Le prisme 12 est lui aussi transparent et il a la forme d'un cylindre tronqué par un plan faisant un angle de 45° avec son axe qui est lui-même perpendiculaire aux faces 6 et 8 du corps de scellé 2. Ainsi, un rayon lumineux arrivant perpendiculairement à la face d'entrée 4, comme le rayon 16, est réfléchi à angle droit et sort par la face de sortie 6 perpendiculairement à cette dernière.

La face 18 du corps 2 opposée à la face d'entrée 4 est percée d'une cavité cylindrique 20, d'axe perpendiculaire aux faces 4 et 18, dans laquelle est introduite une première extrémité d'un câble optique 22 constitué par un certain nombre de fibres 24. Le tube 26 est un insert de moulage inarrachable qui permet de maintenir le câble 22 par sertissage, ce tube étant déformé en créant des marques telles que l'arrachage éventuel du câble détruit le revêtement extérieur de celui-ci et interdit la remise en place discrète. De plus, si le câble comporte une gaine métallique tressée, les "picots" ou autres reliefs dus à la pince créant des "crevés" dans les tubes 26 ou 32 bloquent le câble optique de façon irréversible. Si des fibres sont endommagées au moment du sertissage, elles sont prises en compte par l'examen fait après mise en place du scellé.

D'autre part, la déformation de la gaine est plus ou moins élastique : après arrachage éventuel, il se produirait un gonflement en retour qui empêcherait la réintroduction. Une pastille de masquage 28, de forme sensiblement circulaire, est placée au fond de la cavité 20 avant l'introduction du tube 26 et du câble 22. Elle est réalisée en un matériau transparent contenant en inclusion des particules qui arrêtent la lumière, par exemple une pastille de silicone irrégulièrement chargée de particules de cuivre : ainsi, certaines des fibres 24 sont masquées tandis que les autres ne le sont pas ou le sont partiellement.

De la même manière que la face 18, la face 8 du corps de scellé 2 reçoit au moulage un insert en forme de tube 32 qui permet le maintien par sertissage de l'autre extrémité du câble 22, le tube 32 étant déformé en 35. Les extrémités des fibres sont épanouies ou non dans la chambre d'expansion 46. Leurs positions aléatoires sont fixées ou non par une résine de scellement 48. Ainsi, un rayon lumineux comme le rayon 17 qui a pénétré par la face d'entrée 4 mais n'a pas été réfléchi par le prisme 12 pénètre dans le câble 22 à travers la pastille 28 et suit les fibres 24 jusqu'à l'autre extrémité du câble et est diffusé perpendiculairement à la face de sortie 6.

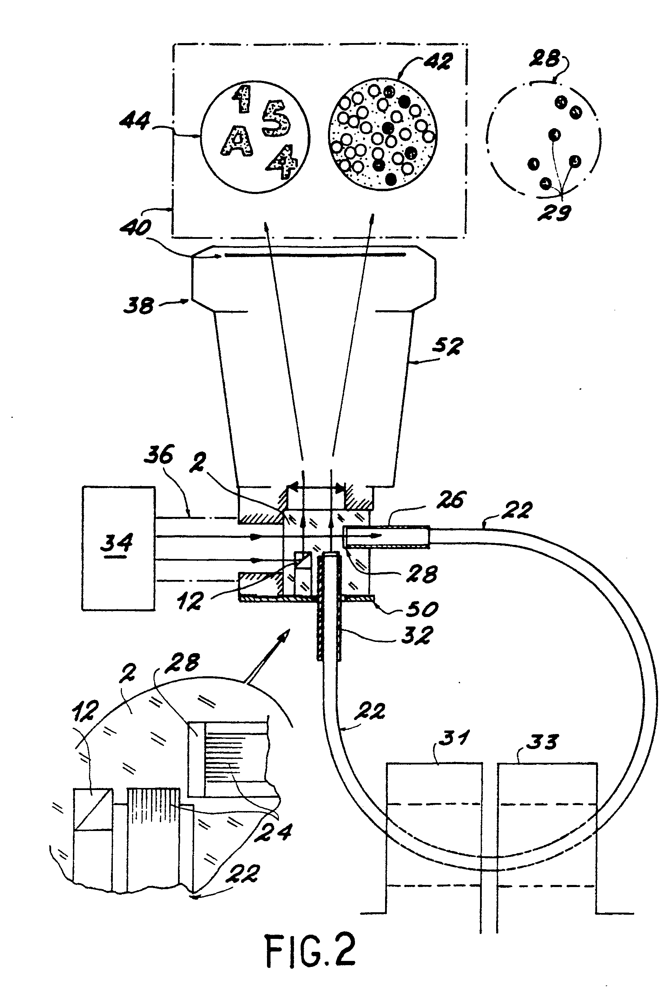

On va maintenant décrire l'utilisation de ce dispositif en référence à la figure 2 où l'on retrouve le corps de scellé 2 dans lequel on a fixé les deux extrémités du câble 22 après avoir fait passer celui-ci à travers les ouïes de fermeture 31 et 33 d'un conteneur, à la manière d'un cadenas. Une source de lumière 34 et son guide d'onde associé 36 sont reliés au corps de scellé 2 par un orifice percé dans le connecteur 50, ce qui permet d'envoyer de la lumière perpendiculairement à la face d'entrée 4 du corps 2.

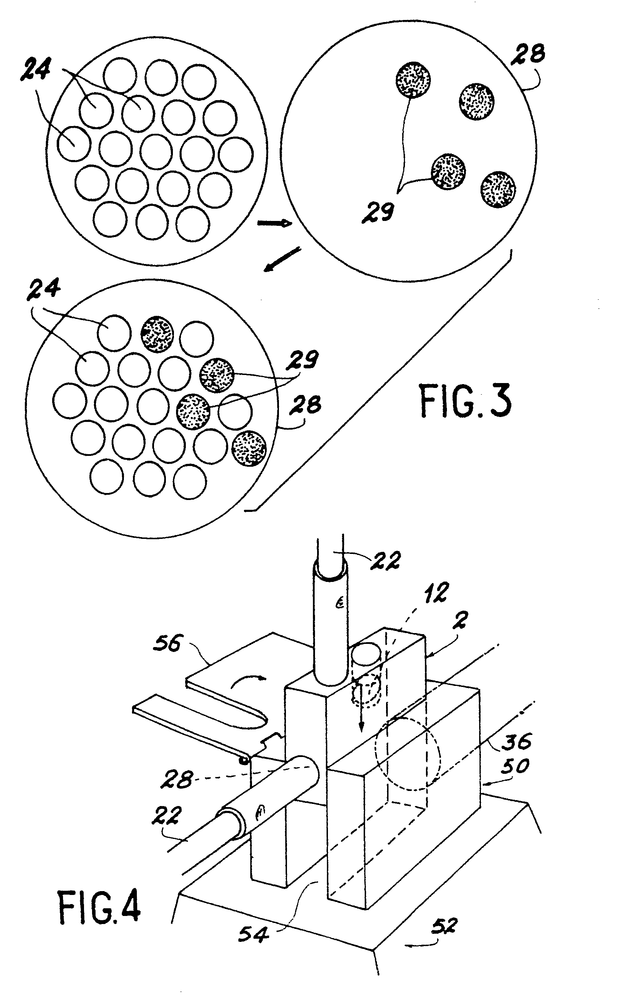

Une partie du faisceau lumineux passe à travers la pastille de masquage 28, puis le long du câble 22 avant de parvenir à un appareil photographique 38, tandis qu'une autre partie est réfléchie par le prisme 12 et envoyée sur l'appareil photographique 38, la face 6 du corps de scellé se trouvant au contact de l'orifice d'entrée de cet appareil. La mise au point est fixe et elle est faite sur le plan commun à la face de sortie du prisme 12 et à la face de sortie du câble 22. C'est ainsi que l'on obtient une image 40 composée de deux parties 42 et 44 : 42 est l'image de l'extrémité du câble 22 avec certaines fibres éclairées et d'autres non et le cas échéant des espaces vides dus à l'épanouissement du faisceau de fibres ; ceci est dû à la présence de la pastille de masquage 28 comme cela est illustré à la figure 3 où l'on voit la forme de la pastille 28 avec des inclusions 29 qui absorbent la lumière. La figure 3 illustre l'effet obtenu à l'entrée du câble 22 et non pas l'image apparaissant sur la photographie. L'autre partie 44 de cette dernière est l'image de la face de sortie du prisme 12, qui porte des caractères alphanumériques, lettres et chiffres, ce qui permet de crypter chaque dispositif de scellement.

La figure 4 montre de manière plus précise la constitution du connecteur 50. On voit que l'appareil photographique 38 est équipé d'un adaptateur 52 en forme de tronc de pyramide, le connecteur 50 étant placé à l'extrémité de cet adaptateur opposé à l'appareil 38. Le connecteur 50 a la forme d'un U dont les deux branches définissent entre elles une fente 54 dans laquelle on introduit le corps de scellé 2, la disposition étant telle que la lumière sortant par la face de sortie soit envoyée sur l'appareil photographique à l'intérieur de l'adaptateur 52. La présence de ce dernier empêche l'entrée de tout rayon lumineux parasite et seules les images du prisme et de l'extrémité du câble 22 apparaissent sur la photographie. Une palette pivotante 56 verrouille le corps de scellé 2 en position dans la fente 54 et, comme le connecteur 50 est fixé en une position bien déterminée sur l'élément 52, le corps de scellé 2 est parfaitement positionné vis-à-vis de l'appareil photographique 38 et vis-à-vis du guide d'onde 36.

Lorsque le dispositif est placé sur le conteneur, on prend une première photographie qui en montre l'état initial. On retire ensuite la source 34 avec son guide 36 du connecteur 50 solidaire de l'appareil photographique 38, que l'on utilisera à nouveau lors d'un contrôle ultérieur. S'il y a eu entre-temps une effraction ou une tentative d'effraction, celle-ci pourra être détectée, même si l'on remet en place le corps de scellé 2 et le câble 22. En effet, si l'on coupe le câble et qu'on le reconstitue par épissurage ou si on l'arrache du corps 2 pour le remettre ensuite, ou encore si l'on intervertit les corps de scellé de deux conteneurs différents, l'image obtenue sur l'appareil photographique sera différente de l'image initiale : éventuellement, les références du prisme auront changé, mais surtout l'image du câble sera différente car celui-ci aura subi une certaine torsion ou certaines fibres auront été cassées au cours de la manipulation et leur position par rapport à la pastille de masquage 28 aura changé. Il est en effet impossible de replacer le câble rigoureusement dans sa position initiale ou de ne pas détruire certaines fibres.

Que les extrémités des fibres soient ou non épanouies dans la chambre d'expansion 46 et qu'elles soient scellées ou non en position, leur disposition détermine une figure de diffraction unique, interdisant toute reconstitution identique à l'état initial après tentative d'extraction du câble 22 hors du tube 32.

De plus, comme on peut le voir sur le détail de la figure 2, les extrémités du câble 22 à l'intérieur du corps de scellé sont très proches l'une de l'autre, ce qui rend très délicate, voire impossible, une tentative de tronçonnage du corps de scellé sans toucher au câble. On peut également recouvrir certaines parties de la surface extérieure du corps de scellé d'un revêtement opaque à la lumière afin de rendre plus difficile une tentative de sciage.

On voit encore sur le détail de la figure 2 que le prisme 12 se trouve très près de l'extrémité de sortie du câble 22 à l'intérieur du corps de scellé 2. Cette disposition, commode pour avoir les deux images 42 et 44 très proches l'une de l'autre sur la photographie 40, n'est pas obligatoire et on choisira la distance entre le prisme et le câble en fonction des dispositifs de lecture dont on dispose.

Ainsi, le dispositif objet de l'invention est particulièrement intéressant puisqu'il permet, de manière simple, de détecter pratiquement à coup sûr, toute tentative d'ouverture du conteneur et toute manipulation du dispositif de scellement.

De plus, on ne sortirait pas du cadre de l'invention en introduisant certaines variantes. Par exemple, un système de lecture automatique à mémoires comparatives peut remplacer avantageusement le dispositif à cliché photographique ; ce système permet d'observer l'intégrité de l'image obtenue des extrémités de fibre et des symboles cryptés de chaque corps de scellé. D'autre part, grâce à des guides d'image, celle-ci peut être reportée sur un tableau de contrôle à distance avec éventuellement le branchement d'une télé-alarme qui se déclenche en cas de non-correspondance c'es images lors d'une vérification, le système permettant un contrôle périodique centralisé quasi continu.

Enfin, on peut prendre certaines précautions afin d'éviter des erreurs d'interprétation lors d'un contrôle. Par exemple, on a intérêt à donner au câble une bonne résistance mécanique afin de ne pas détériorer les fibres en cas de choc ou d'accident : pour cela, on peut placer les fibres à l'intérieur d'une gaine en caoutchouc entourée d'une gaine métallique elle-même entourée d'une gaine extérieure. D'autre part, pour sertir les tubes, on utilisera de préférence une pince à crans multiples qui exerce une pression constante sur le tube quel que soit l'opérateur. On limite ainsi la destruction des fibres situées à la périphérie du câble, ce qui n'est pas très gênant dans la première version, mais davantage dans la seconde car on aurait moins de fibres disponibles pour le codage.

On peut encore envisager le cas où les deux extrémités du câble ne sont pas dans le même corps de scellé : cette disposition permet d'utiliser un câble de grande longueur afin de maintenir ensemble un nombre plus ou moins grand de conteneurs.

## Revendications

1.  Dispositif de scellement d'un conteneur, du type comportant un câble à fibres optiques (22) passant dans au moins une pièce en forme d'anneau solidaire du conteneur, ce câble (22) ayant une extrémité d'entrée de la lumière et une extrémité de sortie de la lumière, des moyens (28) pour masquer au moins une partie des fibres à l'extrémité d'entrée du câble (22) et des moyens d'observation de l'extrémité de sortie lorsqu'on éclaire l'extrémité d'entrée, les deux extrémités du câble (22) étant maintenues dans un corps de scellé (2) dont au moins une partie est transparente à la lumière, caractérisé en ce que les moyens pour masquer au moins une partie des fibres à l'extrémité d'entrée du câble comprennent une pastille de masquage (28) fixée devant ladite extrémité d'entrée, à l'intérieur du corps de scellé (2), et en ce qu'il comporte, à l'intérieur du corps de scellé (2), un prisme (12) disposé de manière à réfléchir une partie de la lumière se dirigeant vers l'extrémité d'entrée du câble (22), ce prisme (12) portant des caractères alphanumériques permettant le repérage crypté du dispositif.

2. Dispositif selon la revendication 1, caractérisé en ce que le corps de scellé (2) comporte deux cavités (20, 30) dans chacune desquelles est logée une extrémité du câble (22), chaque extrémité du câble étant placée à l'intérieur d'un tube (26, 32), lui-même maintenu dans ladite cavité (20, 30), ce tube (26, 32) étant serti sur le câble.

## Claims

1. Device for sealing a container of the type comprising an optical fibre cable (22) passing into at least one ring-shaped member integral with the container, said cable (22) having a light entry end and a light exit end, means (28) for masking at least part of the fibres at the entry end of the cable (22) and means for observing the exit end on illuminating the entry end being provided , the two ends of the cable (22) being held in a seal body (2), whereof at least part is light-transmitting, characterized in that the means for masking at least part of the fibres at the cable entry end comprise a masking disk (28) fixed infront of said entry end within the seal (2) and in that, within the seal (2), it incorporates a prism (12) disposed so as to reflect part of the light directed towards the entry end of the cable (2), said prism (12) carrying alphanumeric characters permitting the coded marking of the device.

2. Device according to claim 1, characterized in that the seal (2) has two cavities (20,30) in each of which is located one end of the cable (22), each end of the cable being placed within a tube (26,32), which is itself held in the said cavity (20,30), said tube (26,32) being crimped onto the cable.

## Patentansprüche

1. Sicherheitsverschlußvorrichtung für einen Behälter, vom Typ mit einem Kabel mit optischen Fasern (22), das wenigstens durch ein Teil in Form eines mit dem Behälter verbundenen Ringes hindurchgeht, wobei das Kabel (22) ein Eintrittsende des Lichtes und ein Austrittsende des Lichtes, Einrichtungen (28), um wenigstens einen Bereich der Fasern am Eingangsende des Kabels (22) zu überdecken, und Beobachtungseinrichtungen des Austrittsendes aufweist, wenn das Eingangsende beleuchtet wird, wobei die beiden Enden des Kabels (22) in einem Verschlußkörper (2) gehalten werden, von dem wenigstens ein Bereich lichtdurchlässig ist, dadurch gekennzeichnet, daß die Einrichtungen zum Überdecken wenigstens eines Bereiches der Fasern am Ende des Eintritts des Kabels eine Überdeckungstablette (28) aufweisen, das vor dem Eintrittsende befestigt ist, im Inneren des Verschließkörpers (2) und daß es im Inneren des Verschließköpers (2) ein Prisma aufweist, das derart angeordnet ist, daß es einen Teil des Lichtes reflektiert, das sich auf das Eintrittsende des Kabels (22) richtet, wobei das Prisma (12) alphanumerische Schriftzeichen trägt, die die verschlüsselte Erkennung der Vorrichtung erlauben.

2. Vorrichtung nach Anspruch 1, dadurch gekennzeichnet, daß der Verschlußkörper (2) zwei Hohlräume (20,30) aufweist, wobei in jedem ein Ende des Kabels (22) angeordnet ist, wobei jedes Ende des Kabels im Inneren eines Rohres (26,32) angeordnet ist, das selbst in dem Hohlraum (20,30) gehalten ist, wobei das Rohr (26,32) um das Kabel herum angeordnet ist.

FIG.1

FIG.2

FIG.3

FIG.4